# EUROPEAN PATENT APPLICATION

(11) **EP 1 837 784 A1**
(43) Date of publication of application: **26.09.2007**
(21) Application number: 07104799.7
(22) Date of filing: 23.03.2007
(51) Int. Cl.: G06F 17/30

(54) **Document management apparatus, document management system, control method of the apparatus and system, program, and storage medium**

(30) Priority: 23.03.2006 JP 2006080908
(71) Applicant: Canon Kabushiki Kaisha, Ohta-Ku, Tokyo 146-8501 (JP)
(72) Inventor: Someya, Shuji, Ohta-ku Tokyo (JP); Kitabatake, Hironobu, Ohta-ku Tokyo (JP); Asasaka, Hidetoshi, Ohta-ku Tokyo (JP); Ooyama, Takeshi, Ohta-ku Tokyo (JP)
(74) Representative: Sharp, Alan Cooper

(57) **Abstract**

Any page in first document information including multiple pages, stored in storage means (180), is compared with the multiple pages in second document information stored in the storage means (180). It is determined whether each page in the first document information agrees with any page in the second document information based on the comparison result. Information indicating the determination result is output.

## Description

### BACKGROUND OF THE INVENTION

### Field of the Invention

The present invention relates to a document management apparatus, a document management system, a control method of the apparatus and system, a program, and a storage medium, which manage information concerning documents each including multiple pages.

### Description of the Related Art

Hitherto, various technologies of managing documents by the use of document information have been proposed. The document information includes document image data or feature information based on document images.

For example, Japanese Patent Laid-Open No. 2004-320378 discloses a technology of extracting feature information from a document registered as the original, registering the extracted feature information on a network, and comparing feature information extracted from a document to be verified with the registered feature information in verification to ensure that the verified document is the original.

In recognition of business forms, Japanese Patent Laid-Open No. 2005-115573 discloses a technology of using weight information set for every page of a form and feature information extracted in units of pages to calculate the similarities between forms that are read and a form formant registered in advance in order to determine a registered form that matches with the form format.

However, in the above technologies, problems can be caused in processing of information concerning documents each including multiple pages. For example, when the feature information extracted from the information concerning documents each including multiple pages is compared with the registered feature information or when registered document information is retrieved on the basis of the extracted feature information, documents having different numbers of pages or documents in which the order of the pages is varied are not considered.

Specifically, in the technology disclosed in Japanese Patent Laid-Open No. 2004-320378, the processing of information concerning documents each including multiple pages is not described. When one piece of feature information is to be extracted from all the pages of documents, it is determined that the originality is not kept if the number of pages in the document information at the registration is different from that in the document information at the verification or if the order of pages in the document information at the registration is varied from that in the document information at the verification. For example, it is presumed that feature information of a document including three pages is registered as an original. In this document, the first page can be replaced with the second page when an available document is read to extract the feature information in order to verify the originality of the document. Although it is determined that the originality is not kept in this case in the related art, there is a demand for determination that the originality is kept when the same pages are included even if the order of pages in the document information at the registration is varied from that in the document information at the verification. In addition, it is also determined in the related art that the originality is not kept if unrelated pages are inserted between the first and second pages in the above example. However, there is also a demand for assurance of the originality when necessary pages are included even if the unrelated pages are inserted between the first and second pages.

In the technology disclosed in Japanese Patent Laid-Open No. 2005-115573, the corresponding pages are compared to verify the documents each including multiple pages. However, the variation in the number of pages or in the order of pages is not considered also in this technology. Specifically, since the correspondence between the pages is lost if unrelated pages exist, if necessary pages are missed, or if the order of pages is varied, it is determined that there is no relevance between the compared documents.

### SUMMARY OF THE INVENTION

Accordingly, it is desirable to determine any similarity between different pieces of document information each including multiple pages by comparison of pages with pages in different orders even if the order of pages is varied between the pieces of the document information.

The present invention in its first aspect provides a document management apparatus as specified in Claims 1 to 12.

The present invention in its second aspect provides a control method for a document management system as specified in Claim 13.

The present invention in its third aspect provides a computer program which, when loaded into a computer and executed, performs a method as specified in Claim 14.

The present invention in its fourth aspect provides a computer readable storage medium storing a computer program as specified in Claim 15.

Further features of the present invention will become apparent from the following description of exemplary embodiments with reference to the attached drawings.

### BRIEF DESCRIPTION OF THE DRAWINGS

The accompanying drawings, which are incorporated in and constitute a part of the specification, illustrate embodiments of the invention and, together with the description, serve to explain the principle of the invention.

Fig. 1 is a block diagram showing an example of the system configuration of a multifunction printer included in an originality assurance system according to a first embodiment of the present invention.

Fig. 2 is an external view of an operation panel unit according to the first embodiment of the present invention.

Fig. 3 shows an example of the structure of the multifunction printer according to the first embodiment of the present invention.

Fig. 4 shows an example of the configuration of the originality assurance system according to the first embodiment of the present invention.

Fig. 5 is a block diagram showing an example of the configuration of an originality assurance server according to the first embodiment of the present invention.

Fig. 6 shows an example of a user authentication screen displayed in a liquid crystal panel in the operation panel unit according to the first embodiment of the present invention.

Fig. 7 shows a basic copy screen displayed in the liquid crystal panel in the operation panel unit according to the first embodiment of the present invention.

Fig. 8 shows a basic send/fax screen displayed in the liquid crystal panel in the operation panel unit according to the first embodiment of the present invention.

Fig. 9 shows a reading settings screen displayed in the liquid crystal panel in the operation panel unit according to the first embodiment of the present invention.

Fig. 10 shows an original-information registration settings screen displayed in the liquid crystal panel in the operation panel unit according to the first embodiment of the present invention.

Fig. 11 shows a registration confirmation screen displayed in the liquid crystal panel in the operation panel unit according to the first embodiment of the present invention.

Fig. 12 shows a registration completion screen displayed in the liquid crystal panel in the operation panel unit according to the first embodiment of the present invention.

Fig. 13 shows an original-information verification settings screen displayed in the liquid crystal panel in the operation panel unit according to the first embodiment of the present invention.

Fig. 14 shows a verification detailed information screen displayed in the liquid crystal panel in the operation panel unit according to the first embodiment of the present invention.

Fig. 15 is a flowchart showing an operation in a registration process according to the first embodiment of the present invention.

Fig. 16 is a flowchart showing an operation in a verification process according to the first embodiment of the present invention.

Fig. 17 is a flowchart showing a basic operation in the verification according to the first embodiment of the present invention.

Fig. 18 shows an example of a report indicating a verification result according to the first embodiment of the present invention.

Fig. 19 is a flowchart showing an operation according to the first embodiment of the present invention.

Fig. 20 shows an example of a report indicating a verification result according to the first embodiment of the present invention.

Fig. 21 is a flowchart showing an operation according to the first embodiment of the present invention.

Fig. 22 is a flowchart graphically showing an operation according to a second embodiment of the present invention.

Fig. 23 shows an example of a report indicating a verification result according to the second embodiment of the present invention.

Fig. 24 shows an example of a report indicating a verification result according to the second embodiment of the present invention.

### DESCRIPTION OF THE EMBODIMENTS

Embodiments of the present invention will now be described.

### First Embodiment

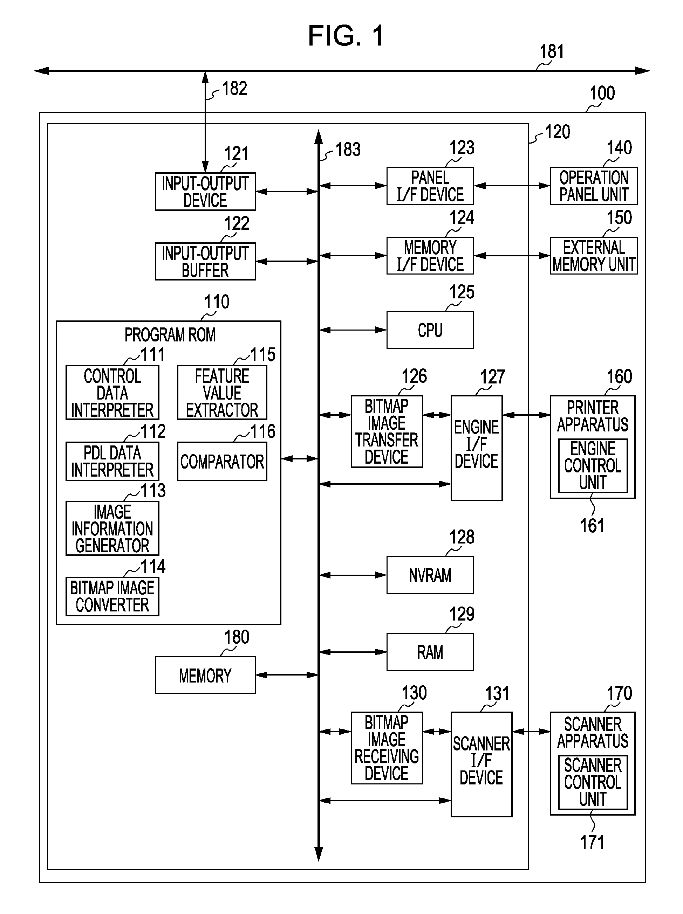

Fig. 1 is a block diagram showing an example of the system configuration of a multifunction printer 100 included in an originality assurance system according to a first embodiment of the present invention. The multifunction printer 100 scans a document to read out an image on the document. The multifunction printer 100 prints the readout image, stores the readout image, and/or transmits data concerning the readout image to other external apparatuses. The multifunction printer 100 mainly includes a control unit 120, a printer apparatus 160, and a scanner apparatus 170. The control unit 120 controls the entire multifunction printer 100. The printer apparatus 160 prints an output image on a recording paper. The scanner apparatus 170 scans a document to read out an image on the document and supplies data concerning the readout image to the multifunction printer 100.

The control unit 120 is connected to the external apparatuses, such as client terminals and server terminals, via a network cable 182 connected to a network 181. The control unit 120 communicates with the terminals via an input-output device 121 that receives and outputs data from and to the external apparatuses. An input-output buffer 122 is used to transmit and receive controls codes for printing, a variety of page description language (PDL) data, and/or a variety of data concerning the multifunction printer 100, received over the network 181. A central processing unit (CPU) 125 controls the entire control unit 120. A program read only memory (ROM) 110 has programs describing the operation of the CPU 125 stored therein. The CPU 125 reads out and executes the programs stored in the program ROM 110 to realize various functions of the multifunction printer 100.

A random access memory (RAM) 129 serves as a working memory used for calculation necessary for, for example, interpretation or printing of the control codes and data and readout of the image and used for processing of the input and output image data. A non-volatile RAM (NVRAM) 128 includes data necessary to be stored if the multifunction printer 100 is turned off. A control data interpreter 111 and a PDL data interpreter 112 in the program ROM 110 interpret print control data and PDL data received from, for example, an external personal computer (PC), respectively. An image information generator 113 in the program ROM 110 generates various image objects. A bitmap image converter 114 in the program ROM 110 converts each image object into a bitmap image.

A feature information extractor 115 in the program ROM 110 extracts feature information (for example, a hash value) from the bitmap image converted by the bitmap image converter 114. The feature information extracted by the feature information extractor 115 is transmitted to the external apparatuses over the network 181 or is stored in a memory 180. A bitmap image transfer device 126 transfers the bitmap image converted by the bitmap image converter 114 or the bitmap image resulting from the scanning of the document in the scanner apparatus 170 to the printer apparatus 160. An engine interface device 127 interfaces between the bitmap image transfer device 126 and an engine control unit 161 in the printer apparatus 160.

A bitmap image receiving device 130 receives the bitmap image read out by the scanner apparatus 170. A scanner interface device 131 interfaces between a scanner control unit 171 in the scanner apparatus 170 and the bitmap image receiving device 130.

A comparator 116 in the program ROM 110 compares the feature information extracted by the feature information extractor 115 from the bitmap image received by the bitmap image receiving device 130 with the feature information stored in the memory 180. When the comparison is performed in an originality assurance server described below, the comparator 116 is not required. The CPU 125 determines whether the document information from which the feature information is extracted by the feature information extractor 115 agrees with the document information stored in the memory 180 on the basis of the comparison result in the comparator 116. The comparison and determination will be described in detail below.

An operation panel unit 140 receives instructions on the apparatuses from a user and displays any error, processing results, and operation guides. A panel interface device 123 interfaces between the operation panel unit 140 and the control unit 120. An external memory unit 150 includes print data, image data externally received, and a variety of information concerning the multifunction printer 100 and is connected to the control unit 120 via a memory interface device 124. The above components are connected to each other via a system bus 183.

The engine control unit 161 in the printer apparatus 160 controls the printing operation including paper feed, printing, and paper ejection. The scanner control unit 171 in the scanner apparatus 170 controls the scanning operation including document feed, readout of an image, and document ejection.

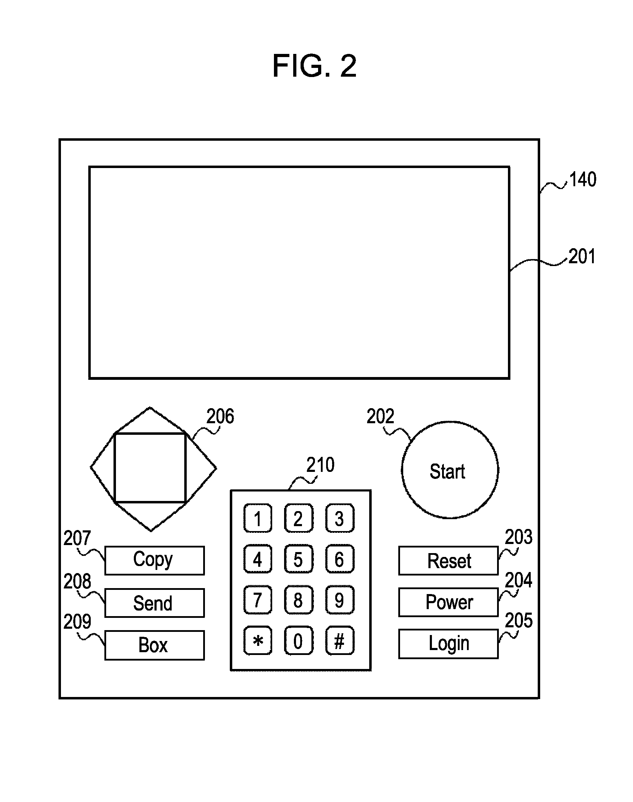

Fig. 2 is an external view of the operation panel unit 140. Referring to Fig. 2, a preview of a registered image, system information such as a print status, and/or the result of a variety of processing are displayed on a liquid crystal panel 201. The liquid crystal panel 201 is a touch panel, which detects information concerning a position where the user touches the liquid crystal panel 201 to display various instructions or to receive text information. A Start button 202 is pressed to instruct start of a copy or sending function.

Other hard keys include a Reset button 203 used for resetting the apparatuses, a Power button 204 used for turning on/off the multifunction printer 100, a numeric keypad 210 with which the user inputs, for example, the number of copies, and cursor keys 206 used for operating the cursor displayed on the liquid crystal panel 201. Mode keys used for switching functional modes of the multifunction printer 100 include a Copy key 207, a Send key 208, and a Box key 209.

A Login key 205 is pressed when user authentication is performed before the user operates the multifunction printer 100. Pressing the Login key 205 when the user has been logged in the multifunction printer 100 allows the user to log out. The user authentication operation will be described in detail below.

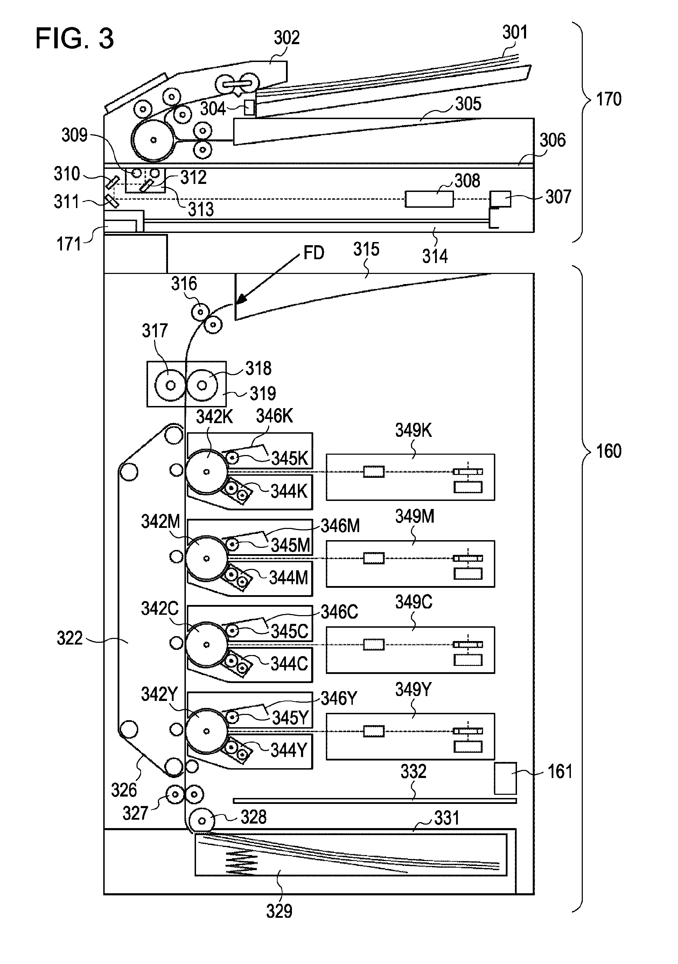

Fig. 3 shows an example of the structure of the multifunction printer 100. The multifunction printer 100 mainly includes a case 315 of the printer apparatus 160, a document feeder unit 302 feeding a document in the scanner apparatus 170, and a scanner unit 314 scanning the document.

The case 315 includes the components in the printer apparatus 160, an engine control unit 161, and a control board storage unit 332. The engine control unit 161 controls the printing processes performed by the above components. The control unit 120 shown in Fig. 1 is housed in the control board storage unit 332.

The multifunction printer 100 is capable of full-color printing using toner of four colors including cyan (C), magenta (M), yellow (Y), and black (K). The multifunction printer 100 includes photosensitive drums 342 (342C, 342M, 342Y, and 342K) that are arranged in a direction perpendicular to the conveying direction and that function as four image bearing members. Charging units 345 (345C, 345M, 345Y, and 345K) uniformly charges the surfaces of the photosensitive drums 342. Each print scanner units 349 (349C, 349M, 349Y, and 349K) emits a laser beam while scanning image information to form an electrostatic latent image on each of the photosensitive drums 342.

Each developing units 344 (344C, 344M, 344Y, and 344K) applies the toner to the electrostatic latent image to develop the electrostatic latent image as the toner image. An electrostatic conveying and transfer unit 322 transfers the toner images on the photosensitive drums 342 to a transfer material. Cleaning units 346 (346C, 346M, 346Y, and 346K) remove the toner remaining on the surfaces of the photosensitive drums 342 after the transfer.

An electrostatic conveying belt 326 is a belt member that circulates so as to oppose and be in contact with all the photosensitive drums 342. The electrostatic conveying belt 326 is supported by four rollers in the vertical direction. The electrostatic conveying belt 326 electrostatically attracts the transfer material to the peripheral surface on the left side in Fig. 3 and circulates so as to cause the transfer material to be contact with the photosensitive drums 342. As a result, the transfer material is conveyed to the transfer position along the electrostatic conveying belt 326, and the toner images on the photosensitive drums 342 are sequentially transferred to the transfer material.

A paper feed unit 331 feeds the transfer material to an image forming unit. Multiple transfer materials are housed in a paper feed cassette 329. In the image formation, a paper feed roller 328 and a registration roller pair 327 rotate in accordance with the image forming operation to feed the multiple transfer materials in the paper feed cassette 329 one by one. The tip of the fed transfer material abuts against the registration roller pair 327 to temporarily stop the transfer material and form a loop, and the transfer material is fed again along the electrostatic conveying belt 326.

A fixing unit 319 fixes the toner images transferred to the transfer material. The fixing unit 319 includes a rotating heating roller 318 and a pressure roller 317 that is contact with the heating roller 318 to apply heat and pressure to the transfer material. Specifically, the transfer material on which the toner images on the photosensitive drums 342 are transferred is conveyed through the pair of the pressure roller 317 and the heating roller 318 in the fixing unit 319 and the heat and pressure are applied to the transfer material through the pair of the pressure roller 317 and the heating roller 318 to fix the toner images of multiple colors on the surface of the transfer material. The transfer material on which the toner images are fixed is ejected to an eject unit through an eject roller pair 316.

In the multifunction printer 100, the scanner apparatus 170 scans a document to read out an image on the document. The document feeder unit 302 in the scanner apparatus 170 feeds documents 301 one by one from the top onto a platen glass 306. After the document is read out by the scanner unit 314, the document on the platen glass 306 is ejected into an eject tray 305.

A sensor 304 detects the presence of a document. When the document is fed onto the platen glass 306 in the document feeder unit 302, a lamp 309 is turned on and an optical unit 313 is started to be moved so that the document is irradiated with the light to scan the document. At this time, the light reflected from the document is led to a charge coupled device (CCD) image sensor (hereinafter referred to as a CCD) 307 through mirrors 312, 310, and 311 and a lens 308. The image on the document scanned in the above manner is read out by the CCD 307. The image data output from the CCD 307 is subjected to predetermined processing and, then, is supplied to the control unit 120 through the scanner interface device 131.

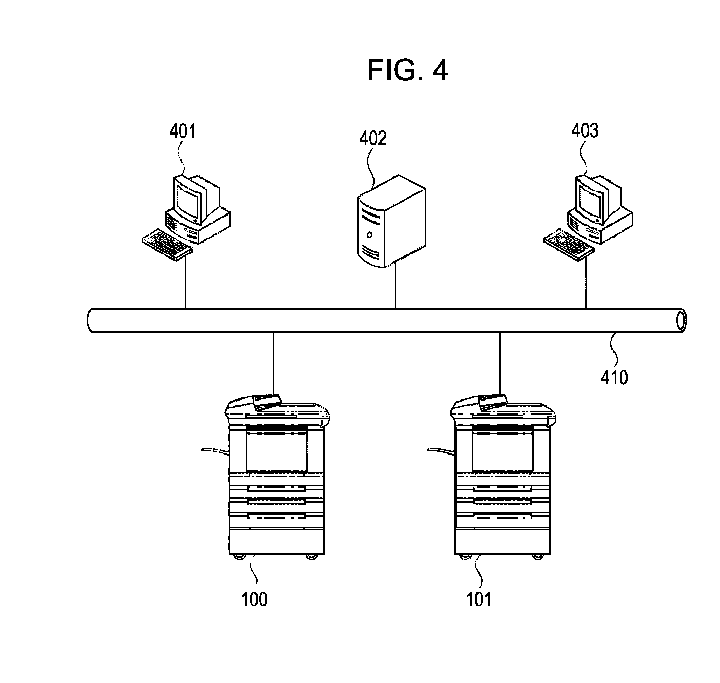

Fig. 4 shows an example of the configuration of the originality assurance system according to the first embodiment of the present invention. The multifunction printer 100 described above and a multifunction printer 101 having a function similar to that of the multifunction printer 100 are used as terminals for receiving and outputting a variety of data. The multifunction printer 100 and the multifunction printer 101 are connected to a local area network (LAN) 410, so that the multifunction printer 100 and the multifunction printer 101 communicate with a PC 401, a mail server 402, and an originality assurance server 403 connected to the LAN 410 to transmit and receive data. In the originality assurance system, the terminals may be connected to each other over a communication medium, such as the Internet, instead of the LAN 410.

The originality assurance server 403 is connected to the LAN 410 to receive service requests about the originality assurance from the multifunction printer 100 and the multifunction printer 101. Specifically, in order to register information specified as the original by the multifunction printer 100 or the multifunction printer 101, the originality assurance server 403 receives information (image data or feature information) on a document to be registered and registers the received information. The originality assurance server 403 compares the registered information with the information stored in the originality assurance server 403 in response to a request for comparison (verification) with the original, received from the multifunction printer 100 and the multifunction printer 101, to determine any similarity between the registered information and the stored information.

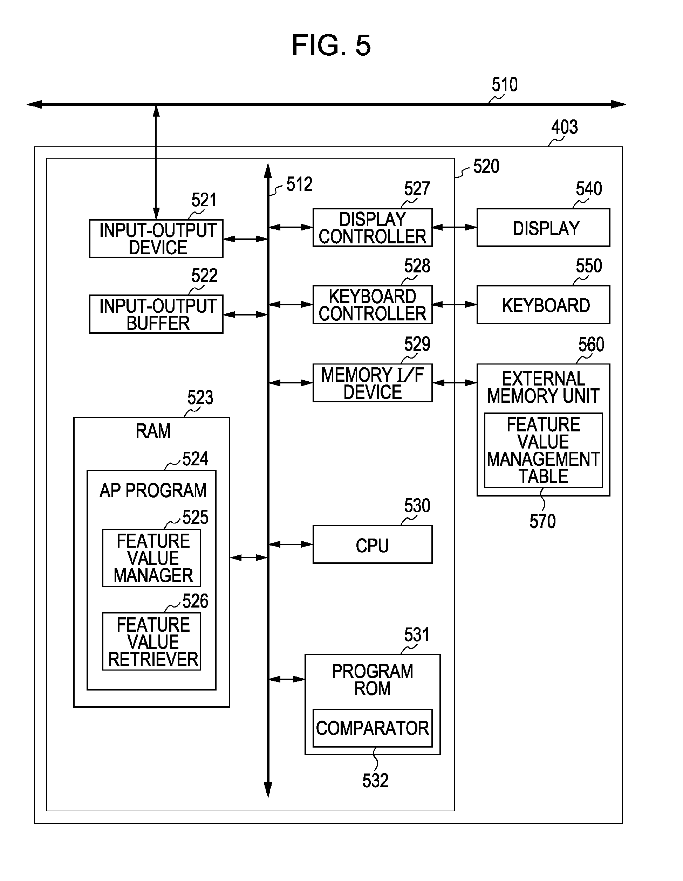

Fig. 5 is a block diagram showing an example of the configuration of the originality assurance server 403. Referring to Fig. 5, a control unit 520 includes a CPU 530 controlling the operation of the entire originality assurance server 403 and a program ROM 531 including programs describing the operation of the CPU 530. The CPU 530 reads out and executes the programs stored in the program ROM 531 to realize various functions of the originality assurance server 403. The control unit 520 communicates with other terminals connected to a network 510 via an input-output device 521 that receives and outputs data from and to the terminals. The program ROM 531 includes a comparator 532 having a function similar to that of the comparator 116 in the multifunction printer 100.

An input-output buffer 522 is used to transmit and receive various controls codes, feature information, and a variety of data received over the network 510. A RAM 523 serves as a working memory used for calculation necessary for interpretation or printing of the control codes and data and used for processing of the print data. An application program (AP program) 524 in the RAM 523 describes the operations of application software and drivers running on the computer. A feature information manager 525 in the AP program 524 receives and manages feature information extracted from a document, which is the original, in registration of the original information. A feature information retriever 526 in the AP program 524 retrieves the feature information of the original, requested on the basis of retrieval conditions received in verification of the original information.

A display 540 displays an image processed in the computer and a display controller 527 controls the display in the display 540. A keyboard 550 receives a user input and a keyboard controller 528 controls the user input received by the keyboard 550. An external memory unit 560 is a non-volatile memory, such as a hard disk, in which print data and information concerning the host computer are stored. The external memory unit 560 is connected the control unit 520 via a memory interface device 529.

The external memory unit 560 includes a feature information management table 570 with which the feature information stored (registered) in the originality assurance server 403 is managed. The above functional components are connected to each other via a system bus 512.

An originality assurance process performed in the originality assurance system having the above configuration will now be described in detail. Original information means document information specified as the original. Registered information means document information registered as the original. Verification information means document information of which the originality is to be verified.

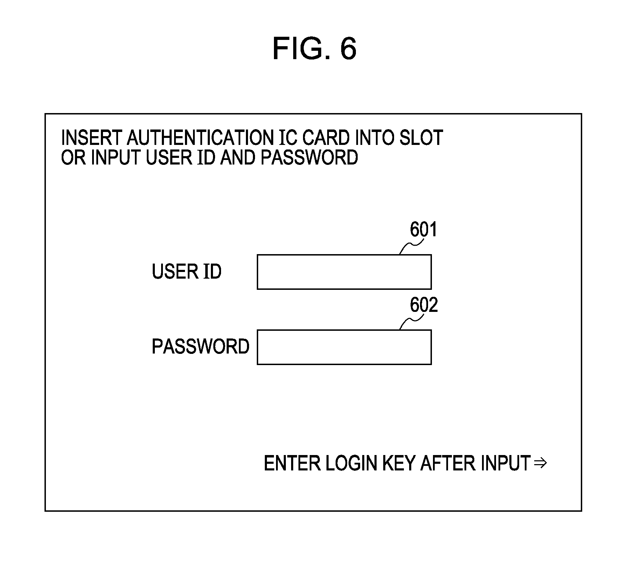

Fig. 6 shows an example of a screen displayed in the liquid crystal panel 201 in the operation panel unit 140 shown in Fig. 2. Before operating the multifunction printer 100, a user uses the screen in Fig. 6 to input a user ID and a password for the user authentication in order to log into the multifunction printer 100. When the user inputs a user ID in a user ID input field 601 and a password in a password input field 602 and presses the Login key 205 in Fig. 2, the multifunction printer 100 compares the input user information with the user information registered in advance in the memory 180 and allows the user to log in if the input user information agrees with the registered user information. The user may insert an IC card into a slot to cause the multifunction printer 100 to read out the stored authentication information, instead of inputting the user ID and password.

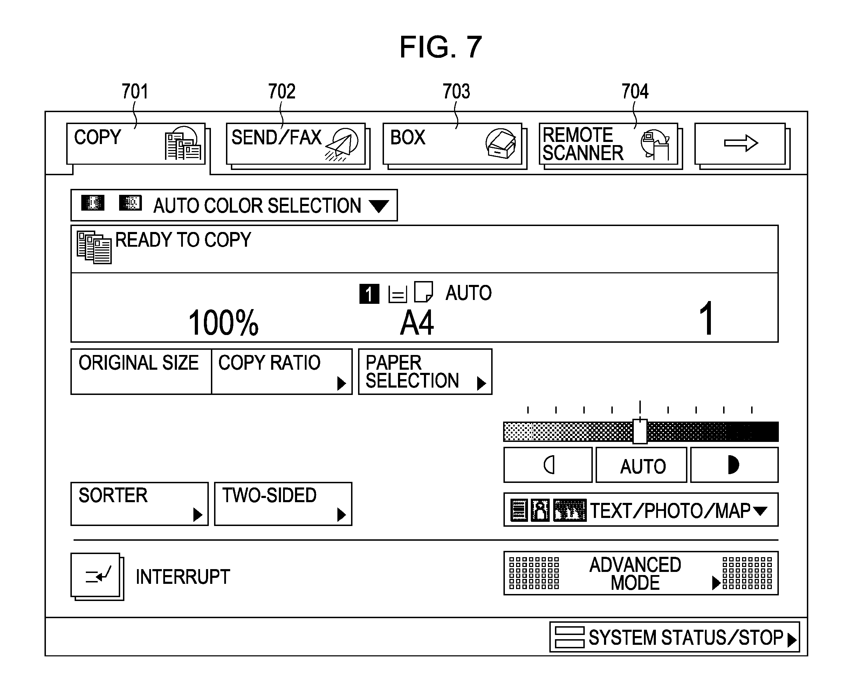

Fig. 7 shows a basic copy screen that is first displayed after the user has logged in. Mode keys 701 to 704 are pressed to switch functional modes of the multifunction printer 100. In a copying process in which data is input with the scanner apparatus 170 and data is output with the printer apparatus 160, detailed settings are input on the basic copy screen and the Start button 202 in Fig. 2 is pressed to start the copying process.

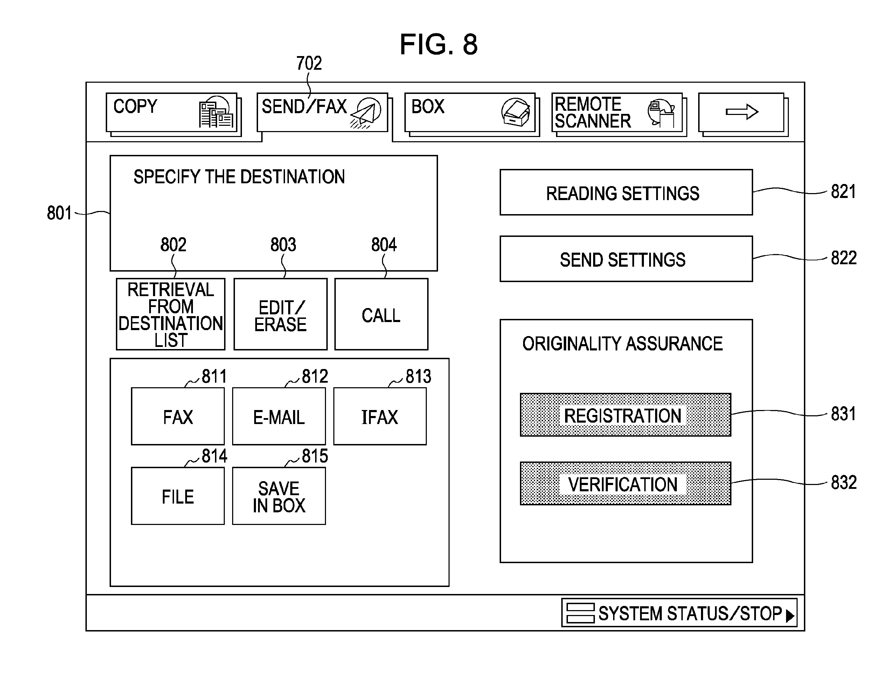

Fig. 8 shows a basic send/fax screen displayed when the mode key 702 is pressed. Various detailed settings are input on this basic send/fax screen when the data input with the scanner apparatus 170 is to be transmitted to the external apparatuses, when the data is to be stored in a storage area in the multifunction printer 100, or when facsimile data is to be transmitted and received.

A destination set from a destination list described below is displayed in a destination display field 801. A "retrieval from destination list" button 802 is pressed to read out destination information registered in advance to set the destination. An "edit/erase" button 803 is pressed to edit or erase the destination already set or to directly input a new destination. A "call" button 804 is pressed to read out the destination information that was previously used.

Transmission method selection buttons 811 to 815 are pressed to display screens on which detailed settings in accordance with a transmission method, such as fax transmission or e-mail transmission, are input. For example, when Internet facsimile (IFAX) is used to transmit a mail having a facsimile image attached thereto, the mail address of a destination, a resolution, and a compression format can be set.

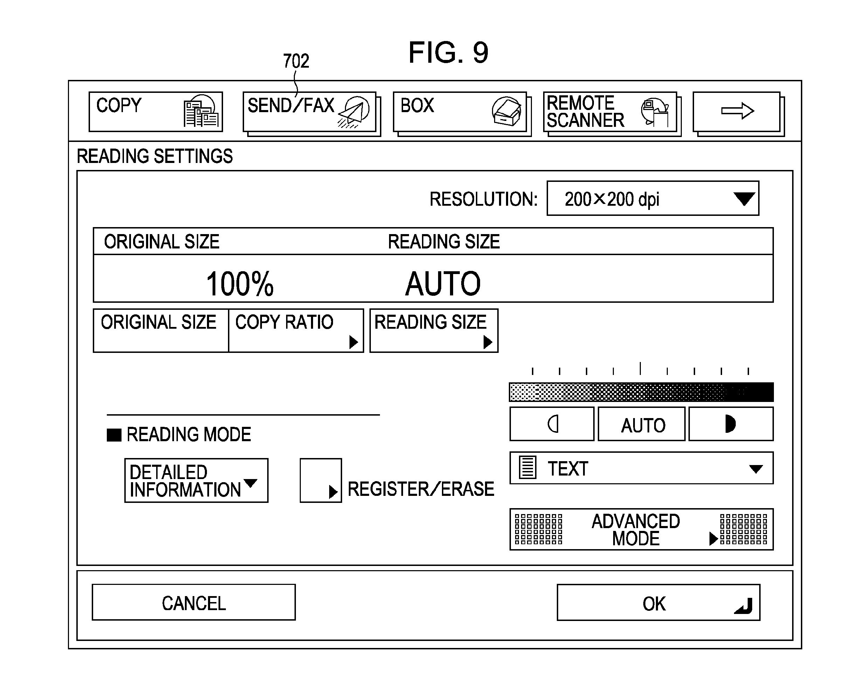

A "reading settings" button 821 is pressed to input detailed settings when a document is scanned by the scanner apparatus 170 to read out an image on the document. Pressing the "reading settings" button 821 displays a reading settings screen in Fig. 9 on which the user can set a document size or a readout resolution. A "send settings" button 822 is pressed to input detailed settings when data is encrypted to transmit the encrypted data or when data is transmitted with a password being set.

A "registration" button 831 and a "verification" button 832 are pressed to use the originality assurance service. The "registration" means, for example, that a document is scanned by the scanner apparatus 170 to read out an image on the document and document information on the document is registered as the original in the originality assurance server on a network. The "verification" means that an available document is scanned by the scanner apparatus 170 to read out an image of the document, document information on the document, which is the verification information, is compared with the registered information registered in advance as the original to determine any similarity between the verification information and the registered information, and it is determined whether the verification information is substituted (tampered).

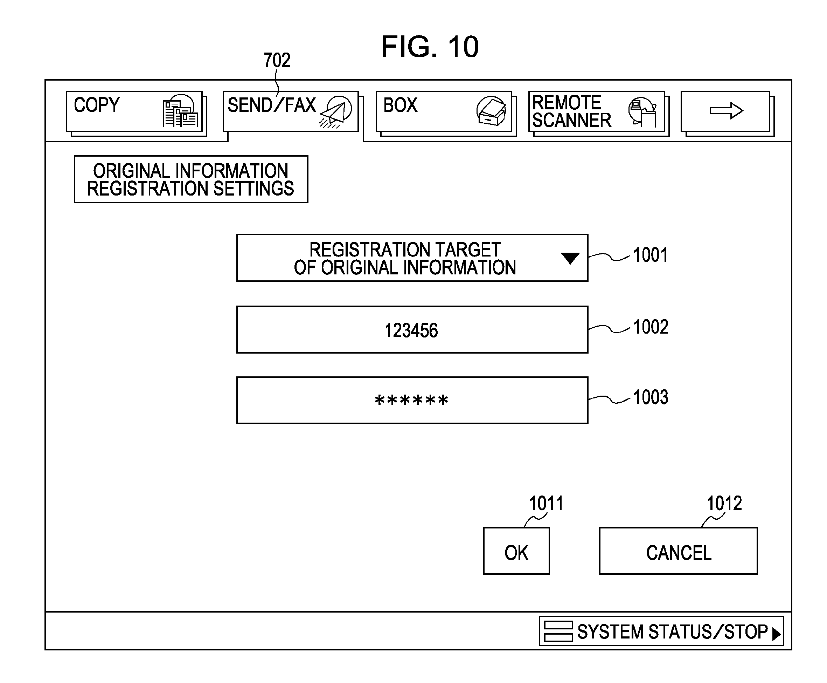

Fig. 10 shows an original-information registration settings screen displayed when the "registration" button 831 is pressed. An originality assurance server on the network is selected from a dropdown list of a registration target selection field 1001. If a desired originality assurance server is not included in the dropdown list, information, such as an IP address, used for identifying the desired originality assurance server may be directly input.

The user ID of a user who uses the originality assurance service is input in an ID input field 1002. A password corresponding to the ID input in the ID input field 1002 is input in a password input field 1003. If the user authentication in Fig. 6 is associated with the user authentication for the originality assurance service, it is not necessary to input the user ID and password on the screen in Fig. 10, thus simplifying the operation.

The user authentication by using the ID and password has the advantages of authentication of a contract user to which the originality assurance service is provided and registration of the original information along with the user information. After the settings are input on the original-information registration settings screen, pressing an OK button 1011 or the Start button 202 starts scanning of a document to be registered as the original by the scanner apparatus 170. When a Cancel button 1012 is pressed, all the input settings are canceled to return to the basic send/fax screen in Fig. 8.

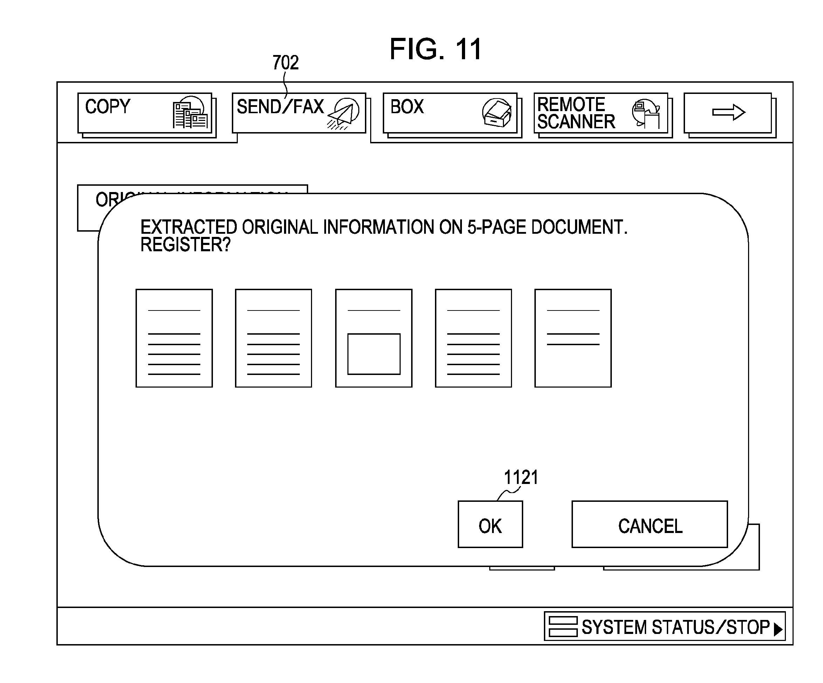

Fig. 11 shows a screen displayed after the OK button 1011 is pressed to terminate the scanning of the document, which is the original. For example, when a document including five pages, which correspond to one original, has been scanned, as shown in Fig. 11, it is possible to confirm whether the readout images that are displayed are the ones desired by the user. This determination prevents reading out of only one side of a two-sided document or registration of a document with some pages being missed.

When an OK button 1121 is pressed, document information on the readout document is transmitted to the originality assurance server and is registered therein. The document information here may be image data or may be feature information extracted from the image data. It is not necessary to provide means for extracting the feature information in the former case. It is possible to increase the security in the latter case because the image data is not transmitted to the network. In the first embodiment of the present invention, the feature information extracted from the image data are to be registered as the original information.

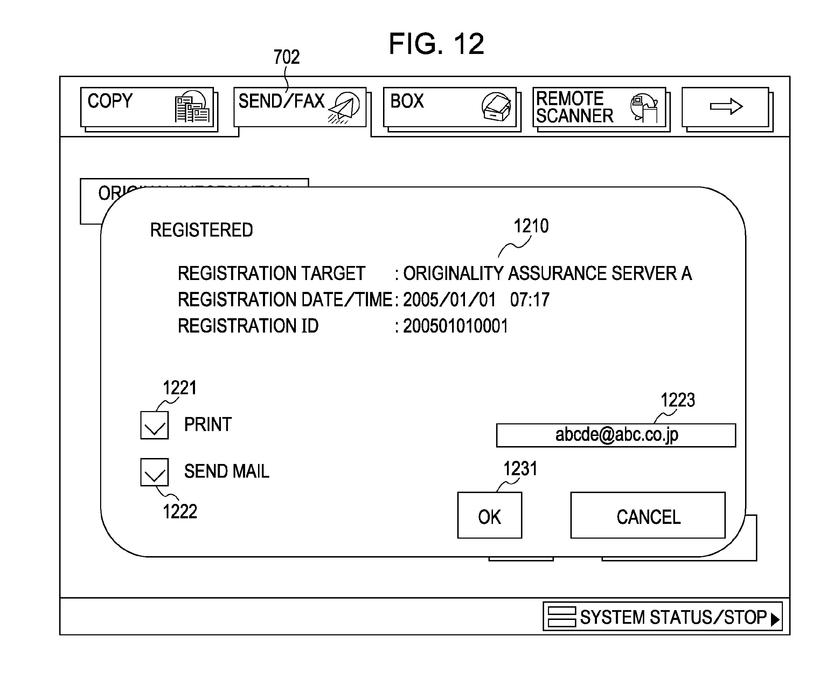

Fig. 12 shows a registration completion screen displayed when the registration in the originality assurance server 403 is completed. The registration completion screen has a registration data display field 1210 where the name of a registration target, a registration date/time, and a registration ID are displayed as the registration data. The information displayed in the registration data display field 1210 is used to identify the registered original information in the verification.

Checking a check box 1221 and pressing an OK button 1231 causes the printer apparatus 160 to print out the content of the registered data. Checking a check box 1222, inputting a mail address in a destination field 1223, and pressing the OK button 1231 transmit by mail the registered data to the destination. The printing out or transmitting of the registered data eliminates the need for writing down the registered data.

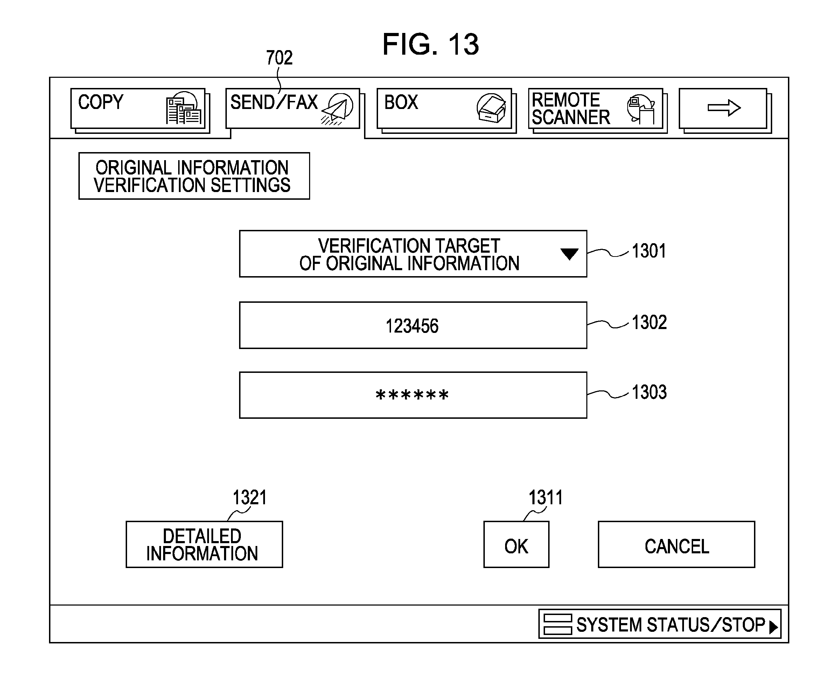

The "verification" process will now be described in detail. Fig. 13 shows an original-information verification settings screen displayed when the "verification" button 832 is pressed. An originality assurance server on the network is selected from a dropdown list of a verification target selection field 1301. If a desired originality assurance server is not included in the dropdown list, information, such as an IP address, used for identifying the desired originality assurance server may be directly input.

The authentication information for the use of the originality assurance service is input in an ID input field 1301 and a password input field 1302, as in the original-information registration settings screen. Desired registered information may be retrieved from multiple originality assurance servers on the network on the basis of retrieval conditions described below, without selecting the original information verification target. In this case, the document information can be verified even if the user has forgotten the registered server. In addition, comparison with multiple pieces of the registered information can be performed in a single operation without identifying the verification target.

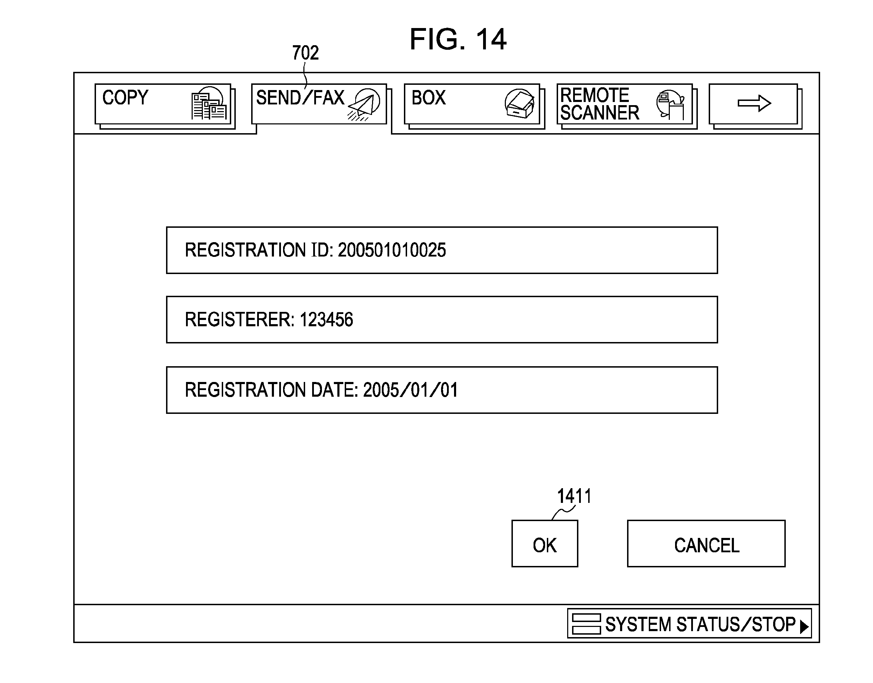

A detailed information button 1321 is pressed to input detailed settings concerning the verification. Fig. 14 shows a screen displayed when the detailed information button 1321 is pressed. If a registration ID, which identifies the registered information to be verified, is known, the registration ID is input. If the registration ID is unknown, a registerer associated with the registered information on the basis of the user authentication information, that is, a user who has registered the original information may be specified. A date when the original information has been registered may be specified. The above items can be set as the retrieval conditions used for retrieving the registered information.

The conditions described above are used to identify the registered original information (that is, the registered information). Specifically, inputting necessary conditions, pressing an OK button 1411 to return to the screen in Fig. 13, and pressing an OK button 1311 in Fig. 13 allow the registered original information meeting the input conditions to be retrieved. One piece of the original information meeting the conditions can be extracted if the registration ID is specified, or multiple pieces of the original information meeting the conditions can be extracted if only the registration date is specified. If the registered information meeting the retrieval conditions cannot be found, a message indicating that the registered information meeting the retrieval conditions cannot be found may be displayed.

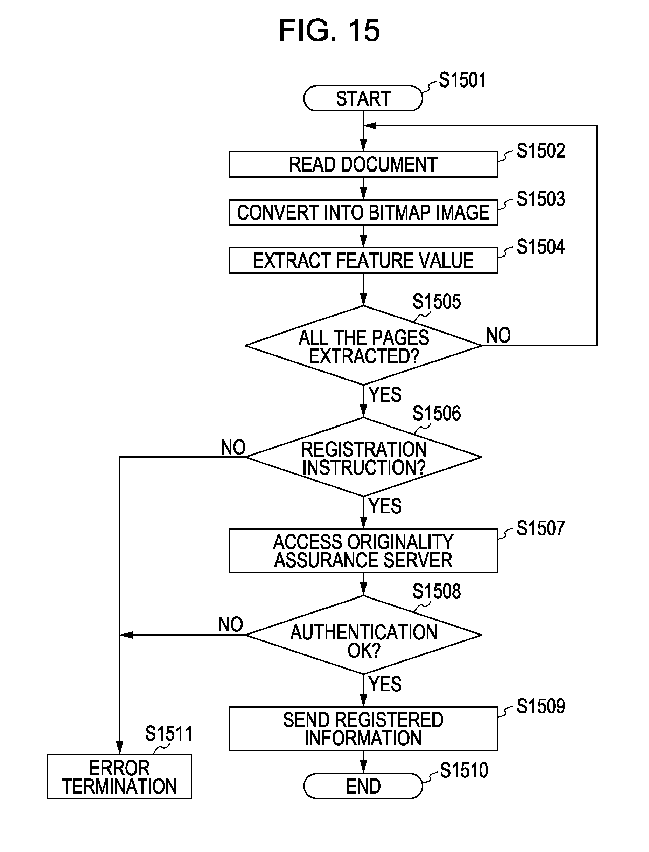

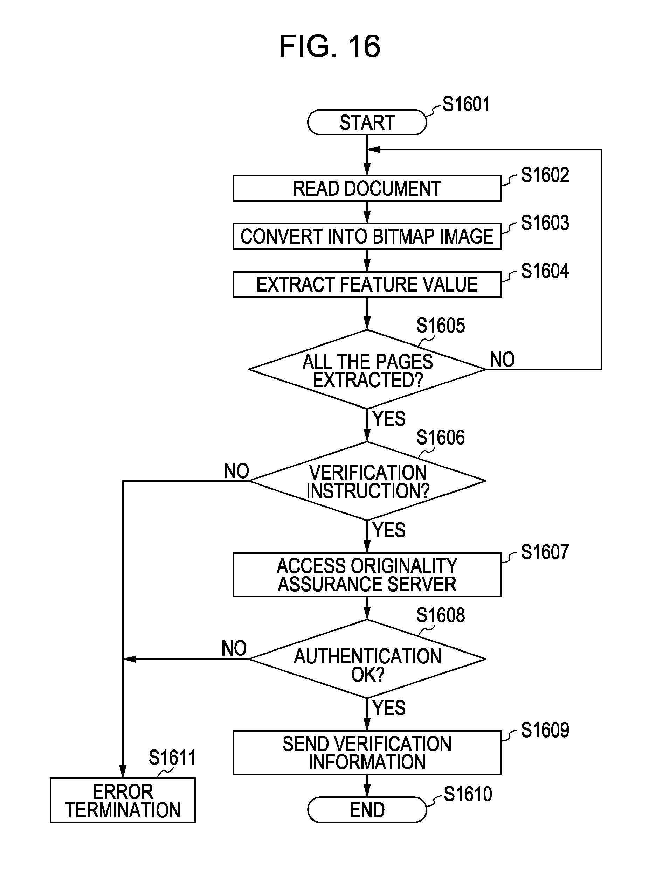

Figs. 15 and 16 are flowcharts graphically showing operations controlled by the CPU 125 in the multifunction printer 100 in the "registration" and the "verification" processes shown in Figs. 8 to 14.

Fig. 15 is a flowchart showing an operation in the "registration" process. In Step S1501, the CPU 125 starts to generate the original information. Step S1501 corresponds to the operation when the OK button 1011 in Fig. 10 or the Start button 202 in Fig. 2 is pressed. In Step S1502, the CPU 125 reads out a document, which is the original. In Step S1503, the CPU 125 converts the readout image data into a bitmap image. In Step S1504, the CPU 125 extracts feature information.

The extraction of the feature information in Step S1504 may be omitted when the image data, instead of the feature information, is registered as the original information, as described above. In Step S1505, the CPU 125 determines whether all the pages have been read out. Specifically, the CPU 125 may determine whether any page remains in an automatic document feeder (ADF) or may inquire of the user whether the readout of all the pages is completed in the liquid crystal panel 201. If the CPU 125 determines in Step S1505 that all the pages have not been extracted, the CPU 125 goes back to Step S1502 to read out the subsequent page.

If the CPU 125 determines in Step S1505 that all the pages have been extracted, then in Step S1506, the CPU 125 causes the user to finally confirm the content of the registration information. Specifically, this step corresponds to the screen shown in Fig. 11. The CPU 125 may display the preview of the image as in the screen in Fig. 11 or only the number of pages where the feature information is extracted may be displayed. If the user does not instruct the registration, the CPU 125 proceeds to Step S1511 to perform an error termination process.

If the user instructs the registration in Step S1506, then in Step S1507, the CPU 125 accesses the originality assurance server 403 on the basis of the information input by the user. In Step S1508, the CPU 125 performs the user authentication on the basis of the authentication information input by the user. If the user authentication failed, the CPU 125 proceeds to Step S1511 to perform the error termination process. If the user authentication succeeded, then in Step S1509, the CPU 125 transmits the registered information to the originality assurance server 403 and terminates the operation.

Fig. 16 is a flowchart showing an operation in the "verification" process. In Step S1601, the CPU 125 starts to generate the verification information. Step S1601 corresponds to the operation when the OK button 1311 in Fig. 13 is pressed. In Step S1602, the CPU 125 reads out a document to be verified. In Step S1603, the CPU 125 converts the readout image data into a bitmap image. In Step S1604, the CPU 125 extracts feature information.

The extraction of the feature information in Step S1604 may be omitted when the image data is processed as the verification information. In Step S1605, the CPU 125 determines whether all the pages have been read out. If the CPU 125 determines in Step S1605 that all the pages have not been extracted, the CPU 125 goes back to Step S1602 to read out the subsequent page.

If the CPU 125 determines in Step S1605 that all the pages have been extracted, then in Step S1606, the CPU 125 causes the user to finally confirm the content of the verification information. Specifically, as in the screen shown in Fig. 11, the readout image or the number of pages is displayed to cause the user to confirm the displayed image or number of pages. If the user does not instruct the verification in Step S1606, the CPU 125 proceeds to Step S1611 to perform an error termination process.

If the user instructs the verification in Step S1606, then in Step S1607, the CPU 125 accesses the originality assurance server 403 on the basis of the information input by the user. In Step S1608, the CPU 125 performs the user authentication on the basis of the authentication information input by the user. If the user authentication failed, the CPU 125 proceeds to Step S1611 to perform the error termination process. If the user authentication succeeded, then in Step S1609, the CPU 125 transmits the verification information to the originality assurance server 403 and terminates the operation.

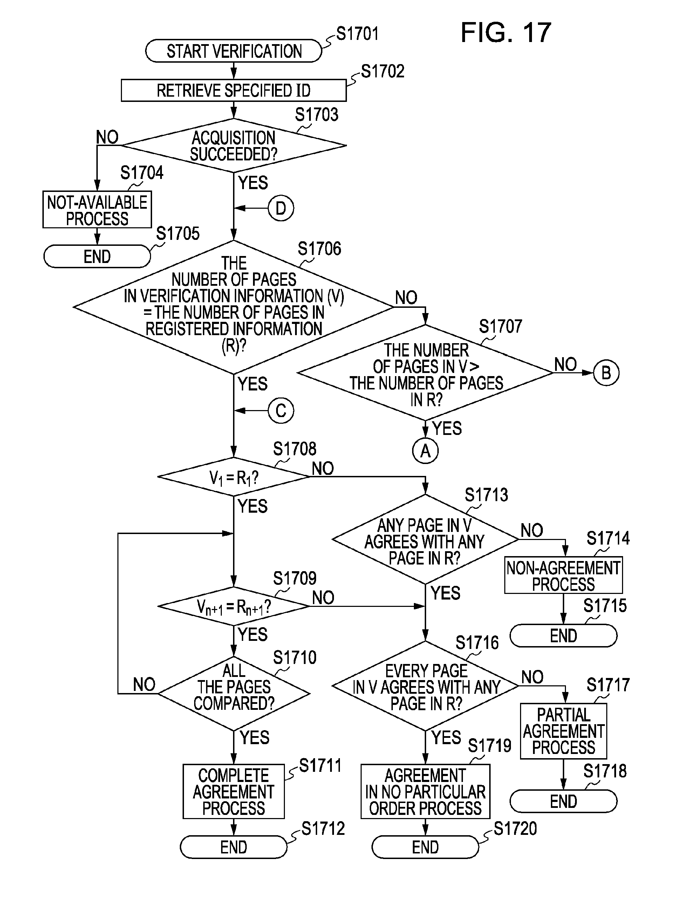

Figs. 17, 19, 21 and 22 are flowcharts graphically showing operations controlled by the CPU 530 in the originality assurance server 403 in the comparison between the registered information and the verification information to verify the document information.

Fig. 17 is a flowchart showing a basic operation in the "verification". In Step S1701, the CPU 530 receives the registration ID used for identifying the registered information, along with the verification information, from the multifunction printer 100 or 101. In Step S1702, the CPU 530 retrieves the registered information corresponding to the received registration ID. In Step S1703, the CPU 530 determines whether the acquisition of the registered information succeeded. If the CPU 530 determines that the acquisition of the registered information failed, then in Step S1704, the CPU 530 performs a "not-available process". In Step S1705, the CPU 530 terminates the operation. In the "not-available process", for example, the CPU 530 indicates to the inquiring multifunction printer that no corresponding registered information exists.

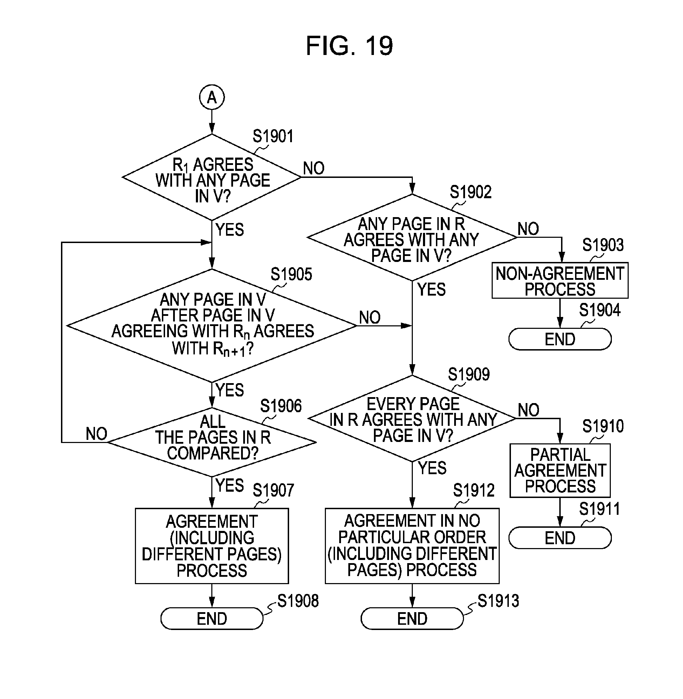

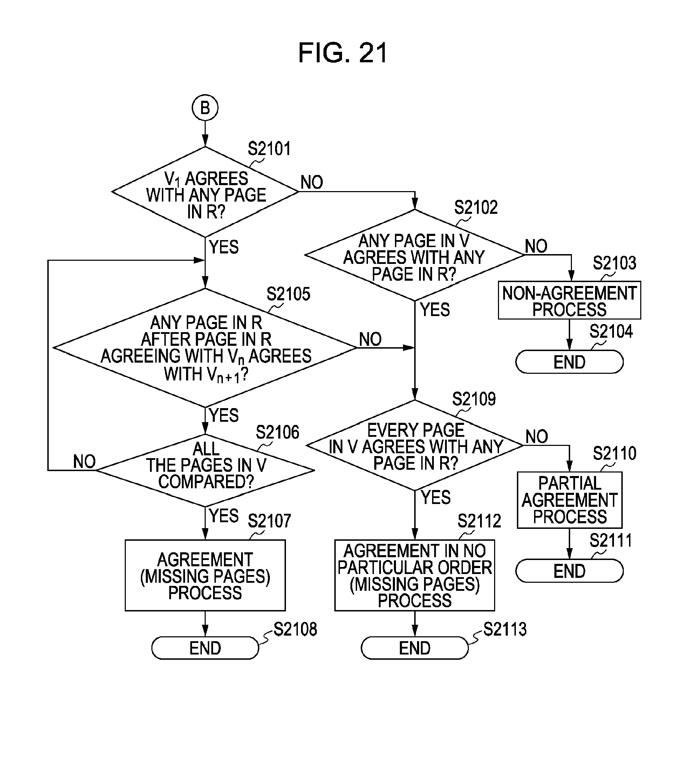

If the CPU 530 determines in Step S1703 that the acquisition of the registered information succeeded, then in Step S1706, the CPU 530 determines whether the number of pages in the verification information is equal to that in the registered information. If the number of pages in the verification information is different from that in the registered information, then in Step S1707, the CPU 530 determines whether the number of pages in the verification information is larger than that in the registered information. The CPU 530 proceeds to the operation in Fig. 19 or Fig. 21 in accordance with the determination result.

If the CPU 530 determines in Step S1706 that the number of pages in the verification information is equal to that in the registered information, then in Step S1708, the CPU 530 compares the feature information of the verification information with that of the registered information to determine whether the first page in the verification information agrees with the first page in the registered information. Reference letters "V" and "R" in Figs. 17, 19, and 21 denote the verification information and the registered information, respectively. The number following the reference letters indicates a page number in the respective information. For example, "V₁" denotes the first page in the verification information.

If the CPU 530 determines in Step S1708 that the first page in the verification information agrees with the first page in the registered information, then in Step S1709, the CPU 530 compares the subsequent page in the registered information with the subsequent page in the verification information. "Vₙ₊₁" denotes a page subsequent to the page determined in the previous step, in the verification information. For example, when the CPU 530 proceeds from Step S1708 to Step S1709, the CPU 530 compares the second page in the verification information with the second page in the registered information in Step S1709 to determine whether the second page in the verification information agrees with the second page in the registered information.

If the CPU 530 determines in Step S1709 that the subsequent page in the registered information agrees with the subsequent page in the verification information, then in Step S1710, the CPU 530 determines whether the comparison of all the pages in the verification information is completed. If the comparison of all the pages in the verification information is not completed, the CPU 530 goes back to Step S1709 to perform the comparison of the subsequent pages. If the CPU 530 determines in Step S1710 that the comparison of all the pages in the verification information is completed, then in Step S1711, the CPU 530 performs a "complete agreement process". In Step S1712, the CPU 530 terminates the operation. In the "complete agreement process", the CPU 530 outputs the information indicating that the verification information agrees with the registered information in the number of pages, the content of pages, and the order of pages. For example, a certificate certifying that a document to be verified is the original may be issued in the "complete agreement process". The output information is indicated to the multifunction printer 100, which displays the indicated information in the operation panel unit 140 or prints the indicated information with the scanner apparatus 170.

If the CPU 530 determines in Step S1708 that the first page in the verification information does not agree with the first page in the registered information, then in Step S1713, the CPU 530 determines whether at least one page in the verification information agrees with any page in the registered information. If the CPU 530 determines that the verification information does not have any page common to the registered information, then in Step S1714, the CPU 530 performs a "non-agreement process". In Step S1715, the CPU 530 terminates the operation. In the "non-agreement process", the CPU 530 outputs the information indicating that the verification information does not have any page common to the registered information even if the order of pages is not considered.

If the CPU 530 determines in Step S1709 that the subsequent page in the registered information does not agree with the subsequent page in the verification information or determines in Step S1713 that at least one page in the verification information agrees with any page in the registered information, then in Step S1716, the CPU 530 determines whether every page in the verification information agrees with any page in the registered information. Specifically, the CPU 530 determines in Step S1716 whether every page in the verification information has the corresponding page in the registered information even if the order of pages in the verification information is different from that in the registered information.

If the CPU 530 determines in Step S1716 that every page in the verification information does not agree with any page in the registered information, then in Step S1717, the CPU 530 performs a "partial agreement process". In Step S1718, the CPU 530 terminates the operation. In the "partial agreement process", the CPU 530 outputs the information indicating that some pages in the verification information have the corresponding pages in the registered information but the remaining pages in the verification information are different from those in the registered information.

If the CPU 530 determines in Step S1716 that every page in the verification information agrees with any page in the registered information, then in Step S1719, the CPU 530 performs an "agreement in no particular order process". In Step S1720, the CPU 530 terminates the operation. In the "agreement in no particular order process", the CPU 530 outputs the information indicating that all the pages in the verification information have the corresponding pages in the registered information although the order of pages in the verification information is different from that in the registered information.

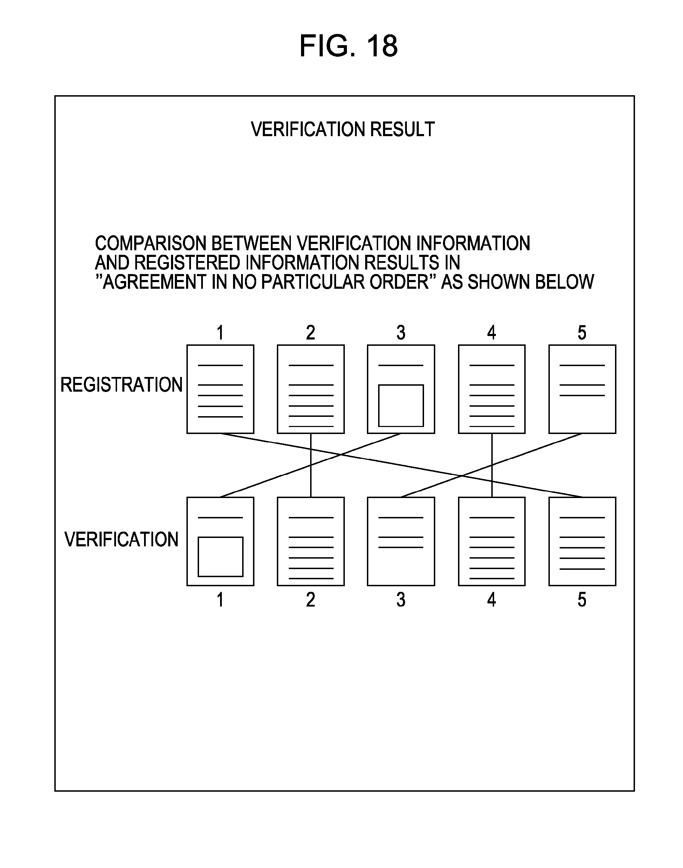

Fig. 18 shows an example of a report indicating a verification result output when the "agreement in no particular order process" is performed in Step S1719. Since the agreement in no particular order means that all the pages in the verification information have the corresponding pages in the registered information although the order of pages in the verification information is different from that in the registered information, as described above, the report is displayed in a format in which the correspondence between the pages in the registered information and those in the verification information can be seen. Accordingly, the user can easily confirm that the order of pages in the verification information is different from that in the registered information although the content of the verified document is not substituted and can also confirm the order of pages in the registered original information.

Fig. 19 is a flowchart showing an operation performed when the CPU 530 determines in Step S1707 that the number of pages in the verification information is larger than that in the registered information. In Step S1901, the CPU 530 determines whether the first page in the registered information agrees with any page in the verification information. If the CPU 530 determines that the first page in the registered information agrees with any page in the verification information, the CPU 530 proceeds to Step S1905.

In Step S1905, the CPU 530 determines whether the page in the registered information subsequent to a page that is determined in the previous step to have the corresponding page in the verification information agrees with any page in the verification information after the page that is determined in the previous step to have the corresponding page in the registered information. If the determination is affirmative, the CPU 530 proceeds to Step S1906 to determine whether the comparison of all the pages in the registered information is completed. If the CPU 530 determines that the comparison of all the pages in the registered information is not completed, the CPU 530 goes back to Step S1905 to continue the comparison.

If the CPU 530 determines in Step S1906 that the comparison of all the pages in the registered information is completed, then in Step S1907, the CPU 530 performs an "agreement (including different pages) process". In Step S1908, the CPU 530 terminates the operation. In the "agreement (including different pages) process", the CPU 530 outputs the information indicating that every page in the registered information agrees with any page in the verification information and the order of pages in the verification information is the same as that in the registered information but some pages in the verification information do not have the corresponding pages in the registered information.

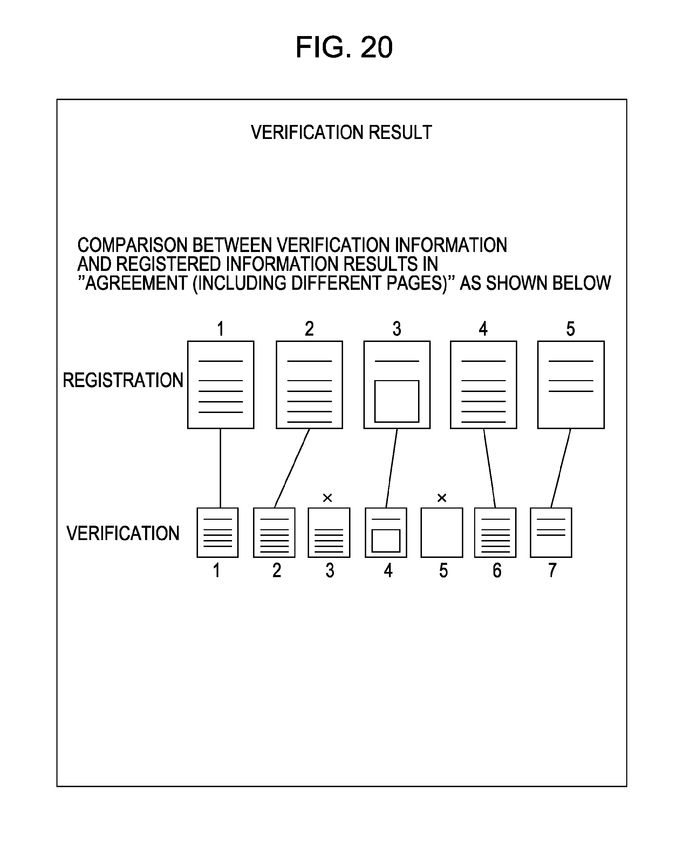

Fig. 20 shows an example of a report indicating a verification result output when the "agreement (including different pages) process" is performed in Step S1907. As described above, the agreement (including different pages) means that the same corresponding pages exist in the verification information and the registered information but pages (shown by "x") that do not exist in the registered information are included in the verification information. The report is displayed in a format in which the correspondence between the pages in the registered information and those in the verification information can be seen. In addition, pages in the verification information, which are not included in the registered information, are shown in the report so as to be distinguishable from the other pages.

Accordingly, the user can easily confirm that, although the content of the verified document is not substituted and the order of pages is not varied, pages that are not registered as the originals exist in the verification information and can also confirm which pages are not registered as the originals.

Referring back to Fig. 19, if the CPU 530 determines in Step S1901 that the first page in the registered information does not agree with any page in the verification information, then in Step S1902, the CPU 530 determines whether any page in the registered information agrees with any page in the verification information. If the determination is negative, then in Step S1903, the CPU 530 performs the "non-agreement process". In Step S1904, the CPU 530 terminates the operation. In the "non-agreement process", the CPU 530 outputs the information indicating that the verification information does not have any page common to the registered information even if the order of pages is not considered.

If the determination is negative in Step S1905 or if the CPU 530 determines in Step S1902 that any page in the registered information agrees with any page in the verification information, then in Step S1909, the CPU 530 determines whether every page in the registered information agrees with any page in the verification information. Specifically, the CPU 530 determines in Step S1909 whether every page in the registered information has the corresponding page in the verification information even if the order of pages in the verification information is different from that in the registered information.

If the determination is negative in Step S1909, then in Step S1910, the CPU 530 performs the "partial agreement process". In Step S1911, the CPU 530 terminates the operation. In the "partial agreement process", the CPU 530 outputs the information indicating that some pages in the verification information have the corresponding pages in the registered information but the remaining pages in the verification information are different from those in the registered information.

If the determination is affirmative in Step S1909, then in Step S1912, the CPU 530 performs an "agreement in no particular order (including different pages) process". In Step S1913, the CPU 530 terminates the operation. In the "agreement in no particular order (including different pages) process", the CPU 530 outputs the information indicating that all the pages in the registration information have the corresponding pages in the verification information although the order of pages in the verification information is different from that in the registered information.

Fig. 21 is a flowchart showing an operation performed when the CPU 530 determines in Step S1707 that the number of pages in the registered information is larger than that in the verification information. In Step S2101, the CPU 530 determines whether the first page in the verification information agrees with any page in the registered information. If the CPU 530 determines that the first page in the verification information agrees with any page in the registered information, the CPU 530 proceeds to Step S2105.

In Step S2105, the CPU 530 determines whether the page in the verification information subsequent to a page that is determined in the previous step to have the corresponding page in the registered information agrees with any page in the registered information after the page that is determined in the previous step to have the corresponding page in the verification information. If the determination is affirmative, the CPU 530 proceeds to Step S2106 to determine whether the comparison of all the pages in the verification information is completed. If the CPU 530 determines that the comparison of all the pages in the verification information is not completed, the CPU 530 goes back to Step S2105 to continue the comparison.

If the CPU 530 determines in Step S2106 that the comparison of all the pages in the verification information is completed, then in Step S2107, the CPU 530 performs an "agreement (missing pages) process". In Step S2108, the CPU 530 terminates the operation. In the "agreement (missing pages) process", the CPU 530 outputs the information indicating that every page in the verification information agrees with any page in the registered information and the order of pages in the registered information is the same as that in the verification information but some pages in the registered information do not have the corresponding pages in the verification information.

Although an example of a report indicating a result of the "agreement (missing pages) process" is not shown, the report is displayed in a format in which the correspondence between the pages in the registered information and those in the verification information can be seen, as in the report shown in Fig. 20. Which pages are missed is also displayed in the report.

Accordingly, the user can easily confirm that, although the content of the verified document is not substituted and the order of pages is not varied, some pages that are registered as the originals are missed and can also confirm which pages are missed.

Referring back to Fig. 21, if the CPU 530 determines in Step S2101 that the first page in the verification information does not agree with any page in the registered information, then in Step S2102, the CPU 530 determines whether any page in the verification information agrees with any page in the registered information. If the determination is negative, then in Step S2103, the CPU 530 performs the "non-agreement process". In Step S2104, the CPU 530 terminates the operation. In the "non-agreement process", the CPU 530 outputs the information indicating that the verification information does not have any page common to the registered information even if the order of pages is not considered.

If the determination is negative in Step S2105 or if the CPU 530 determines in Step S2102 that any page in the verification information agrees with any page in the registered information, then in Step S2109, the CPU 530 determines whether every page in the verification information agrees with any page in the registered information. Specifically, the CPU 530 determines in Step S2109 whether every page in the verification information has the corresponding page in the registered information even if the order of pages in the registered information is different from that in the verification information.

If the determination is negative in Step S2109, then in Step S2110, the CPU 530 performs the "partial agreement process". In Step S2111, the CPU 530 terminates the operation. In the "partial agreement process", the CPU 530 outputs the information indicating that some pages in the registered information have the corresponding pages in the verification information but the remaining pages in the registered information are different from those in the verification information.

If the determination is affirmative in Step S2109, then in Step S2112, the CPU 530 performs an "agreement in no particular order (missing pages) process". In Step S2113, the CPU 530 terminates the operation. In the "agreement in no particular order (missing pages) process", the CPU 530 outputs the information indicating that all the pages in the verification information have the corresponding pages in the registered information although the order of pages in the registered information is different from that in the verification information and that some pages exist in the registered information but do not exist in the verification information.

According to the first embodiment of the present invention described above, the originality assurance system including the multifunction printer scanning a document and the originality assurance server in which the original information is stored is used to compare the registered information registered in advance with the verification information to be verified in order to ensure the originality.

### Second Embodiment

A second embodiment of the present invention will now be described. Description of the components similar to those in the first embodiment of the present invention is omitted herein. The second embodiment of the present invention differs from the first embodiment of the present invention in that the verification on the basis of multiple pieces of the registered information is performed without specifying the registered ID used for identifying the registered information.

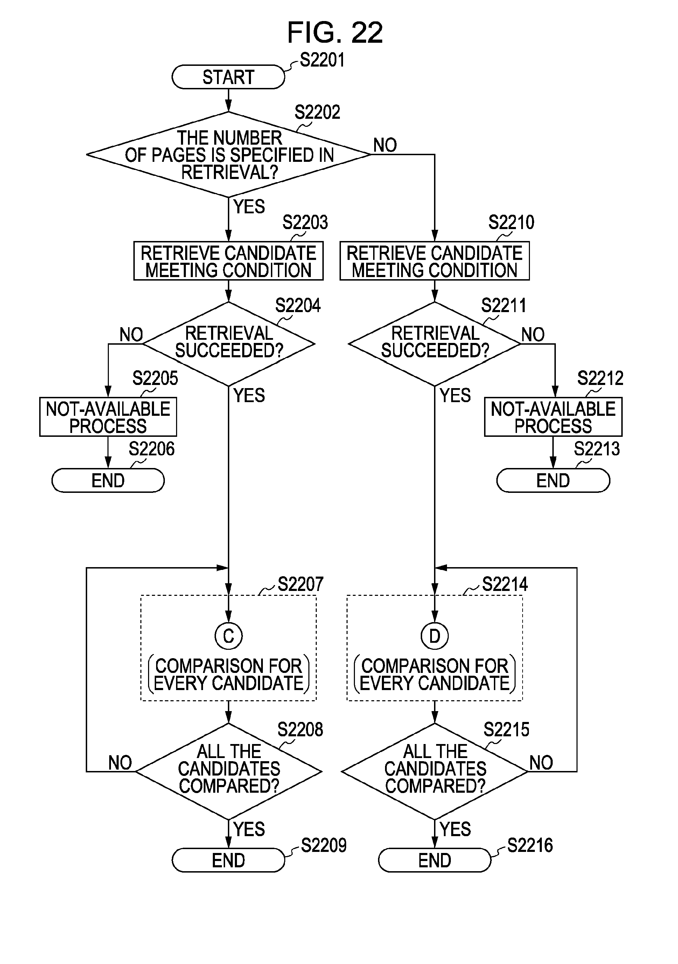

Fig. 22 is a flowchart graphically showing an operation controlled by the CPU 530 in an originality assurance server according to the second embodiment of the present invention in a process of comparing the registered information with the verification information to verify the document information. In Step S2201, the CPU 530 starts the verification. In Step S2202, the CPU 530 determines whether the user specifies the number of pages as one condition of extracting the verification information to be compared with the registered information.

If the CPU 530 determines that the user specifies the number of pages, then in Step S2203, the CPU 530 retrieves the registered information meeting the condition of the number of pages and any other conditions (for example, the registration date/time). In Step S2204, the CPU 530 determines whether the registered information meeting the conditions has been retrieved. If the CPU 530 determines in Step S2204 that the registered information meeting the conditions has not been retrieved, then in Step S2205, the CPU 530 performs the "not-available process".
In Step S2206, the CPU 530 terminates the operation. If the CPU 530 determines in Step S2204 that the registered information meeting the conditions has been retrieved, the CPU 530 proceeds to Step S2207.

In Step S2207, the CPU 530 compares every candidate of the registered information retrieved in Step S2203 with the verification information and sequentially stores the comparison results. The comparison is performed in the same manner as in Step S1708 and the subsequent steps in Fig. 17. After the comparison for every candidate is completed, then in Step S2208, the CPU 530 determines whether the comparison with all the candidates of the registered information is completed. If the determination is negative, the CPU 530 goes back to Step S2207 to continue the comparison. If the determination is affirmative in Step S2208, then in Step S2209, the CPU 530 terminates the operation.

If the CPU 530 determines in Step S2202 that the user does not specify the number of pages, then in Step S2210, the CPU 530 retrieves the registered information meeting any other input conditions. In Step S2211, the CPU 530 determines whether the registered information meeting the conditions has been retrieved. If the CPU 530 determines in Step S2211 that the registered information meeting the conditions has not been retrieved, then in Step S2212, the CPU 530 performs the "not-available process".
In Step S2213, the CPU 530 terminates the operation. If the CPU 530 determines in Step S2211 that the registered information meeting the conditions has been retrieved, the CPU 530 proceeds to Step S2214.

In Step S2214, the CPU 530 compares every candidate of the registered information retrieved in Step S2210 with the verification information and sequentially stores the comparison results. The comparison is performed in the same manner as in Step S1706 and the subsequent steps in Fig. 17. After the comparison for every candidate is completed, then in Step S2215, the CPU 530 determines whether the comparison with all the candidates of the registered information is completed. If the determination is negative, the CPU 530 goes back to Step S2214 to continue the comparison. If the determination is affirmative in Step S2215, then in Step S2216, the CPU 530 terminates the operation.

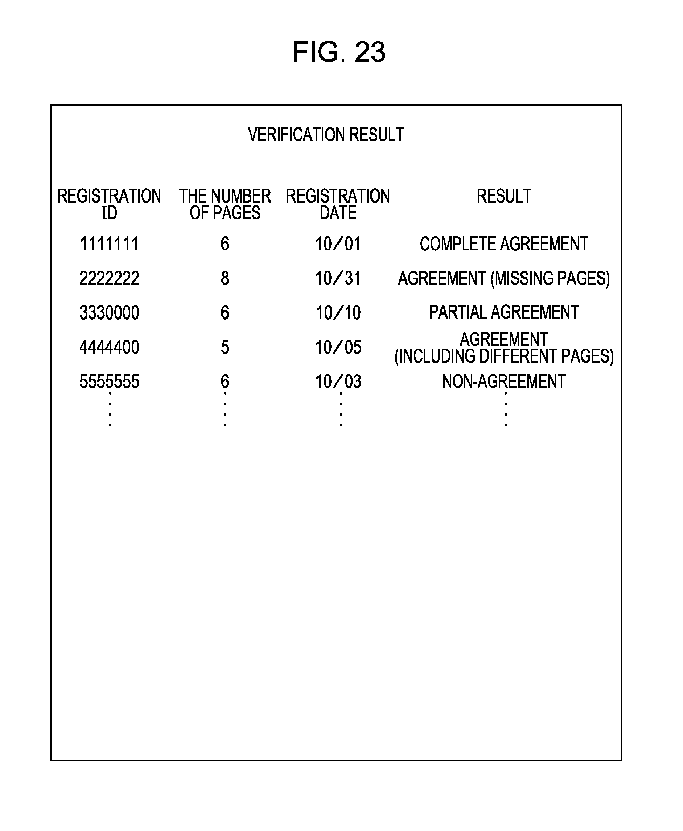

Fig. 23 shows an example of a report indicating a verification result output when the CPU 530 terminates the operation in Step S2216. This report includes registration IDs extracted as the registered information meeting the conditions of the retrieval as items and the verification results are shown for every item. For example, in the case of the first row having the registration ID: 1111111, the registered information has six pages, is registered on October 1st, and has the comparison result between this registered information and the input verification information indicating the "complete agreement".

The verification results of other registration IDs are also shown in the list, so that the user can determine how much agreement is achieved between the verification information and each candidate of the registered information. The verification method by using multiple pieces of the registered information and multiple pieces of the verification information is not limited to the one described above.

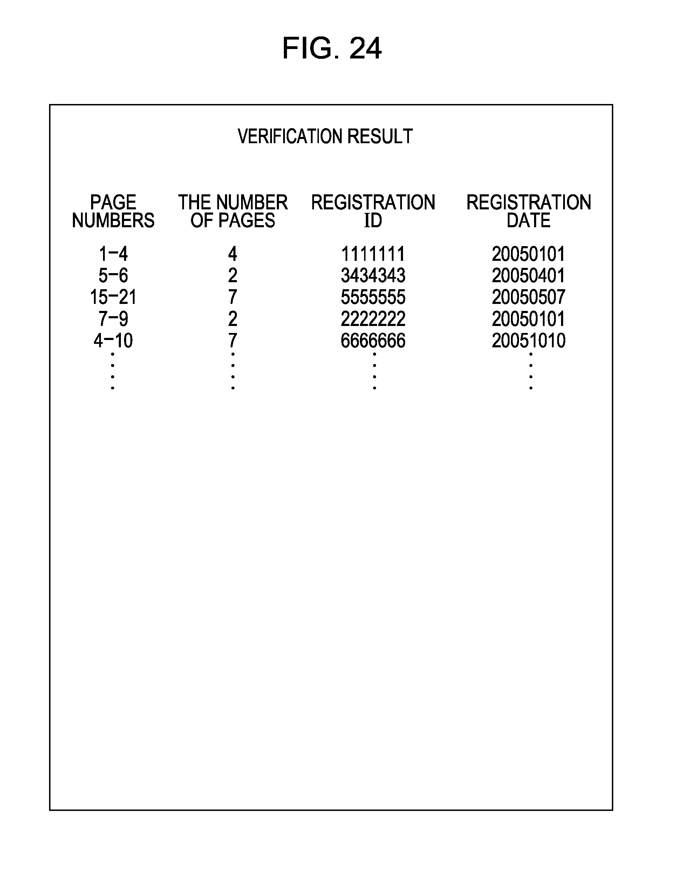

For example, an example of a report indicating the verification result according to the second embodiment of the present invention is shown in Fig. 24. In the report in Fig. 24, the pages included in the one piece of the verification information are divided into multiple groups, and the pieces of the registered information achieving the "complete agreement" with the respective groups are shown in a list format. The report shows that, for example, 15 to 21 pages in the verification information achieve the "complete agreement" with the registered information having the registration ID: 5555555.

Although not shown, multiple pieces of the verification information and multiple pieces of the registered information may be specified to extract pieces of the verification information completely agreeing with or agreeing in no particular order with each piece of the registered information.

According to the second embodiment of the present invention described above, the originality assurance system including the multifunction printer scanning a document and the originality assurance server in which the original information is stored is used to compare the multiple pieces of the registered information registered in advance with the multiple pieces of the verification information to be verified in order to ensure the originality.

The present invention is not limited to the originality assurance systems having the structures described above. Although the original information is registered by the originality assurance server connected to the multifunction printer via the network in the first and second embodiments of the present invention, the functions of the originality assurance server may be provided in the multifunction printer. In this case, it is possible to easily ensure the originality even if the network environment is not sufficient. In addition, since it is not necessary to transmit even the feature information over the network, the security is further increased.

The present invention is not limited to the originality assurance system. For example, the present invention is applicable to a function of retrieving desired data from multiple pieces of data stored in a storage area. In this case, it is possible to perform accurate retrieval even if the order of pages in the stored data is unknown.

The information used in the comparison of the document information need not be the feature information. Specifically, the image data itself may be used in the comparison or the identification information that can be identified in pages may be used in the comparison.

Embodiments of the present invention may include a function of determining any similarity among two or more documents. Specifically, in determination of how much one document agrees with another document, it can be determined whether one document completely agrees with another document or whether the order of pages in one document is varied from that in another document.

Some embodiments may be applied to cases other than the case in which it is determined whether the content of a document is substituted. For example, embodiments may be applied to a case in which a document registered as the original is compared with a document having the content of the original plus additions to identify the added parts. Embodiments are also applicable to a case in which a document is compared with a document registered as the original with the parts added to the content of the original being excluded.

Embodiments are applicable to a function of extracting pages having the content registered in advance from available data. In this case, desired data can be identified or missing page can be identified, thus improving the usability.

The present invention is not limited to the use of the information on the basis of the document scanned by the scanner apparatus 170 in the above embodiments. For example, information to be registered or verified may be acquired from received data stored in a storage area, such as a box, to register or verify the acquired information.

### Other Embodiments

The present invention can be embodied by, for example, a system, apparatus, method, program, or storage medium (recording medium). Specifically, embodiments are applicable to a system including multiple apparatuses or to an apparatus including one device.

The present invention can be embodied by a software program (a program corresponding to each flowchart shown in the drawings in the embodiments) that realizes the functions according to the embodiments described above and that is directly or remotely supplied to a system or apparatus, the computer in which system or apparatus reads out and executes the supplied program code.

Accordingly, the present invention may be embodied by the program code itself installed in the computer to realize the functions of the embodiments described above. Embodiments may include a computer program realizing the function of the embodiments of the present invention.

The above program may be an object code, a program executed by an interpreter, or script data supplied to the OS as long as the object code, program, or the script data has the function of the program.

The recording medium supplying the program may be any recording medium, such as a floppy® disc, a hard disk, an optical disk, a magneto-optical disc (MO), a compact disc-read only memory (CD-ROM), a compact disc recordable (CD-R), a compact disc rewritable (CD-RW), a magnetic tape, a nonvolatile memory card, a ROM, or a digital versatile disc (DVD) (DVD-ROM or DVD-R).

Alternatively, the above program may be downloaded from a Web page on the Internet into the recording medium, such as the hard disk, by using the browser of the client computer. Specifically, the Web page is accessed to download the computer program embodying the present invention or a file that is compressed and include an automatic installation function from the Web page. Alternatively, the program code in the program embodying the present invention may be divided into multiple files that are downloaded from different Web pages. In other words, the embodiment is applicable to a WWW server from which multiple users download the program files that are installed in the computer and that realize the functions according to the embodiments of the present invention.

A program embodying the present invention may be encrypted, the encrypted program may be stored in a storage medium, such as a CD-ROM, and the storage medium may be distributed to users. Users meeting predetermined conditions may be allowed to download key information used for decrypting the encryption from a Web page over the Internet. The key information may be used to execute the encrypted program and to install the program in the computer.

The computer that executes the readout program code realizes the functions of the embodiments described above. In addition, the operating system (OS) or the like running on the computer may execute all or part of the actual processing on the basis of instructions in the program code to realize the functions of the embodiments described above.

In addition, after the program code read out from the storage medium has been written in a memory that is provided in an expansion board included in the computer or in an expansion unit connected to the computer, the CPU or the like in the expansion board or the expansion unit may execute all or part of the actual processing on the basis of the instructions in the program code to realize the functions according to the embodiments described above.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures and functions.

## Claims

1. A document management apparatus comprising:
storage means (180) for storing first document information and second document information each including multiple pages in units of pages;
comparison means (125, 116) for comparing any page in the first document information stored in the storage means with the multiple pages in the second document information stored in the storage means;
determination means (125) for determining whether each page in the first document information agrees with any page in the second document information based on the comparison result in the comparison means; and
output means (140, 160) for outputting information indicating the determination result in the determination means.

2. A document management apparatus according to Claim 1, further comprising:
scanning means (170) for scanning a document to read an image on the document,
wherein the first document information and the second document information stored in the storage means (180) result from the scanning of a first document and a second document respectively by the scanning means (170) to read an image on the first document and an image on the second document.

3. A document management apparatus according to Claim 1 or 2, further comprising:
extraction means (125, 115) for extracting feature information of an image,
wherein the first document information stored in the storage means (180) is first feature information extracted by the extraction means (125, 115) from an image on a first document and the second document information stored in the storage means (180) is second feature information extracted by the extraction means from an image on a second document.

4. A document management apparatus according to any of Claims 1 to 3,
wherein the determination means (125) determines whether the first document information includes the same pages in the same order as in the second document information.

5. A document management apparatus according to any of Claims 1 to 4, further comprising:
identification means (125) for identifying a page that is included in the first document information and that does not agree with any page in the second document information based on the comparison result in the comparison means (125, 116).

6. A document management apparatus according to Claim 5,
wherein the identification means (125) further identifies a page that is included in the second document information and that does not agree with any page in the first document information.

7. A document management apparatus according to Claim 5 or 6,
wherein the output means (140, 160) outputs the determination result in the determination means (125) such that the pages identified by the identification means are distinguishable from other pages.

8. A document management apparatus according to any of Claims 1 to 7,
wherein the storage means (180) stores third document information in addition to the first and second document information,
wherein the comparison means (140, 160) compares any page in the first document information with the multiple pages in the second document information and with multiple pages in the third document information, and
wherein the determination means (125) determines whether each page in the first document information agrees with any page in the second document information and whether each page in the first document information agrees with any page in the third document information, based on the comparison result in the comparison means (125, 116).

9. A document management apparatus according to any of Claims 1 to 8,
wherein the output means (140, 160) includes a display device (140) displaying the determination result in the determination means (125).

10. A document management apparatus according to any of Claims 1 to 9,
wherein the output means (140, 160) includes a printing device (160) for printing the determination result in the determination means (125).

11. A document management apparatus according to Claim 1, further comprising:
an information processing apparatus; and
a server apparatus connected to the information processing apparatus over a network,
wherein the information processing apparatus includes transmission means for transmitting the first and second document information to the server apparatus over the network and the output means (140, 160),
wherein the server apparatus includes receiving means for receiving the first and second document information from the information processing apparatus, the storage means (180), the comparison means (125, 116), and the determination means (125), and
wherein the storage means (180) is arranged to store the first and second document information received by the receiving means.

12. A document management apparatus according to Claim 11,
wherein the server apparatus is an originality assurance server (403)apparatus for ensuring that the first document information has originality if the determination means determines that the first document information received from the information processing apparatus agrees with the second document information registered and stored in advance in the storage means (180) as an original.

13. A control method for a document management system, the control method comprising the steps of:
comparing any page in first document information including multiple pages with multiple pages in second document information;
determining whether each page in the first document information agrees with any page in the second document information based on the comparison result; and
outputting information indicating the determination result.

14. A computer program which, when loaded into a computer and executed, performs a method according to claim 13.

15. A computer readable storage medium storing a computer program as specified in Claim 15.
